# EUROPEAN PATENT APPLICATION

(11) **EP 4 821 676 A1**
(43) Date of publication of application: **14.10.2026**
(21) Application number: 25170185.0
(22) Date of filing: 11.04.2025
(51) Int. Cl.: B32B 5/26, B32B 7/12, H01M 50/231

(54) **PROTECTIVE PART FOR THE BATTERY HOUSING OF ELECTRIC VEHICLES**

(71) Applicant: Autoneum Management AG, 8406 Winterthur (CH)
(72) Inventor: Mazzarella, Luca, 8400 Winterthur (CH)

(57) **Abstract**

Protective part for the battery housing of electric vehicles comprising an impact protecting element comprising a fiber reinforced thermoplastic core comprising fibers in a first matrix, and a first and a second skin, whereby the first and second skins comprise continuous filaments in second matrix, and whereby the skins cover opposite surfaces of the core thereby forming a sandwich, and further comprising at least one flame protecting element. The flame protecting element comprises at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protecting element forms a single plate material.

## Description

### Technical Field

The invention is directed to a protective part for the battery housing of electric vehicles, the use of the part as well as the method of production.

### Background

With the increased demand for electric vehicles, manufacturers and regulators have continuously strived to improve the safety of electric vehicles. As part of this push for safety, the casing, enclosure or housing in which the battery cells are contained has also advanced to a point where these have become integral to the protective package of an electric vehicle.

Protective parts for an electric vehicle have two important functions, among other function; the first is to protect the cells within the battery pack or housing from external factors and the second is to contain a thermal runaway event. Above a temperature of around 120°C the internal barrier between the chemical liquid compartments in the cell is degrading, this will further increase the temperature due to a chemical reaction within the cell. If the temperature reaches around 260°C this battery will go in thermal runaway, with a temperature step change to 800°C or above, combined with a jet fire shooting out of the cell vent, and hot particle ejecta. Certain battery chemistries may be more or less prone to thermal runaway and may occur at different temperatures, however, batteries like those based on lithium-ion chemistry and similar chemistries have been known to occasionally enter a thermal runaway state, usually due to unforeseen factors like those mentioned above.

Thermal runaway event in a battery housing of a car, is an event to be avoided but in case it occurs extreme measures are needed to reduce the effect, in particularly to allow people sufficient time to react and safely distance themselves from a thermal runaway event.

The battery housing of battery electric vehicles may be located between the wheels under the passenger compartment. As the lower part of the housing is facing the road, it may be prone to impact from stones, bollards, speed bumps, curbs or any type of road debris or objects. Hence, there is a need for a strong impact protecting element.

Any impact may damage the housing, or even worse the batteries within. A high impact event may even pierce the housing and damage the batteries directly. Any damage to the housing, or worse to the batteries directly may result in a thermal runaway event of the batteries, potentially starting with the damage to a single cell and spreading to all surrounding cells.

It is known that impact may not only occur from beneath the battery housing, but a side impact in the case of a collision, for example, may also be inflicted on the battery housing. Additionally, due to the required stiffness of the battery housing, an impact in one area can have adverse effects in another, like for example a twisting or warping of the housing structure. Therefore, the entire battery packs are exposed to a drop test imposed on the full battery assembly by regulators in many parts of the world. Thus, any area of the battery pack needs to withstand an impact, a shunt or a bending force, without damaging the cells in the battery housing.

The majority of battery protecting elements for electric vehicles rely on metallic plates, usually steel or aluminium, where improved protection is accomplished by increasing the thickness of the metal plate. These plates may either be integrated as part of the battery housing or may be applied as an additional shielding part or plate below the battery housing. However, the weight of these metallic plates is a problem. In addition, metal tends to plastically deform and not rebound back to its original shape, thus, following an impact a metallic plate would remain deformed.

Another solution is to use composite parts. In certain cases, these composite materials reduce the weight and deformation issues of metallic materials, however, some composites can crack with excessive impact or bending loads.

Standard flame shields alone cannot withstand a thermal runaway event, as they will be perforated within a few seconds, they might work as thermal barriers between battery cells or modules but will not be able to withstand the jet fire and particle ejecta when faced head on. There is a need for a flame protecting element that can withstand a thermal runaway in particular with an abrading jet fire. For the sake of simplicity, we will call this type of shield or plate a flame protecting element.

Flame protecting elements need to withstand a thermal runaway event directed against its surface comprising jet fire and hot particle ejecta coming out of the cell for a given period as defined by the car makers. The flame protecting element may be used close to or opposite battery cell venting areas. However, it might be used for the main traction battery as well as for the smaller batteries incorporated within the vehicle.

Current state-of-the-art flame protection employs a high content mica plate bonded with silicon as a thermal barrier.

In some of the battery housings, the battery cells are placed with their vents towards the passenger compartment, and a flame protecting element was placed opposite the vents. However, in recent years the batteries are placed with their vent directed towards the roadside of the battery housing. As in the lower part of the battery housing also cooling systems and other appliances are housed, the space between the battery cell vents and the wall of the housing become minimised.

The solution for battery housing material was therefore to add mica plates within the battery housing opposite cell vents. This would shield the outer battery housing material form any internal thermal event and enable the pack structure to remain intact long enough to allow vehicle occupants to escape.

Initially, these mica plates were added below the battery lid specifically, however, with the changes in battery architecture the flame protecting element may also be fixed on the battery tray.

Current material on the market is limited in their ability to withstand the thermal event in its severest end phase. Hence mica plates are the sole option for most cases. However, running a pyrotest shows that a mica shield will perforate already after 8 seconds exposure for a 1 mm thickness and 13 s for a 2 mm thickness. Even worst combination of a mica plate with a composite carrier, used normally as a structural part for the battery housing, show that not only the mica plate was impaired also the composite carrier showed considerable damage after the pyro test.

Current mica plates are at their border of optimisation as an increase of thickness, the only option to increase the performance in the pyrotest, is not given in the current battery housing structures. There is still a need for better performing flame protecting element and materials.

As the new designs combined the current composite material or metal housing with mica plates, the impact protecting element and the flame protecting element are combined. However, it was found that the mica plates have a negative impact on the overall impact protection. Due to the inherent brittleness, an impact, bending or crash event on an impact protecting element of either composite or metal lined with a mica flame protecting element may therefore induce cracking of the mica plate. A crack in a mica plate will reduce its flame protecting function. Such cracks may go without notice when the incidence was only minor or upon repeated minor incidences.

Hence, there is a need for an alternative protective part with a flame protecting element and an impact protecting element that is solving the problems of the state of the art, in particular whereby both elements can withstand an impact without negatively impacted the other element. Furthermore, there is a need for combined elements that have more freedom of design, and whereby the design is not dictated by the lack of formability of one component.

### Summary of invention

The object of the invention is achieved by the protective part for the battery housing of electric vehicles comprising an impact protecting element comprising a fiber reinforced thermoplastic core comprising fibers in a first matrix, and a first and a second skin, whereby the first and second skins comprise continuous filaments in second matrix, and whereby the skins cover opposite surfaces of the core thereby forming a sandwich, and further comprising at least one flame protecting element, according to the main claim and the use of such a protective part.

The flame protecting element comprising at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protecting element forms a single plate material.

In particular by the combination of the impact protecting element based on a thermoplastic resin combined with a flame protecting element based on a thermoset matrix and incorporating a core inlay of mechanically bonded nonwoven layer of carbon fibers between 2 inorganic fibrous layers, it is possible to reduce the effect of impact events while maintaining the integrity, while, in the unlikely event of a full thermal runaway, both elements together increase the overall flame resistance of the protecting element.

Surprisingly, it was found that the flame protecting element being stiff by itself enhances the impact protection without breaking or cracking, while the impact protecting element did not melt during a pyrotest directed to the flame protecting element between the pyrotest device and the impact protecting element, thereby maintaining the structural integrity of the impact protecting element.

Preferably the impact protecting element and the flame protecting element are at least partially bonded by an adhesive layer, preferably by an adhesive layer based on polyurethane, preferably a thermoplastic polyurethane, a silicon based adhesive, an acryl based adhesive, an epoxy or phenolic based glue, an adhesive based on silyl modified polymers (SMPs), a polyester based adhesive, preferably a terephthalate based adhesive, a maleic anhydride adhesive, or a thermoplastic hotmelt adhesive.

Preferably both layers are adhered face to face to further increase the stiffness of the impact protecting element, as well as to further enhance the protection during exposure to a jet flame.

The flame protecting element may cover the full impact protecting element or may only cover a part of the impact protecting element, in particular in those areas of the housing that are opposite battery cells, the impact protecting element may comprise at least one flame protecting element or multiple flame protecting elements.

As both materials are mouldable in intricate 3-dimensional shapes, there is a design freedom for both elements as well as both elements in combination, this makes it possible to combine the elements also around corners or curvatures. For instance, it was shown that cupola shapes (EP23213693 hereby incorporated by reference) would enhance the impact performance of the impact protecting element, but the use of state-of-the-art mica plates would prevent proper coverage of such structures. With the element combination of the current invention, it is possible to combine such preferred designs.

### Flame protecting element

The flame protecting element comprises a fibrous inlay core layer comprising a mechanically bonded nonwoven layer of carbon fibers.

Carbon fibres used in this core inlay layer, include those produced by carbonising various organic materials, e.g. cotton wool, lignin, regenerated cellulose or but particularly to a fibre of a synthetic resinous material such as polyacrylonitrile.

Carbonised polyacrylonitrile PAN fibre may include carbonised fibers based on copolymers or terpolymers of acrylonitrile with other monomers, e.g. methyl methacrylate or vinyl acetate, either alone or to which have been added polymers compatible with them such as phenolic resins or Friedel-Crafts condensates.

Carbonization is the thermal process whereby stabilized (oxidized) PAN or pitch fibers are heated to a temperature of 1200 - 1500°C, in order to develop the ultimate strength and modulus of the fibers.

Carbonization is carried out with small stepwise heating rates (which implies longer residence times), while pyrolysis is usually carried out with fast heating rates (sometimes reaching the maximum temperature in a single step change, requiring short residence times).

The carbon fibers used may be sized, whereby a polymeric coating was added to the carbon fibers in order to improve handling and processing. In particularly a sizing may be used to increase compatibility between the carbon fibers and the thermoset matrix used. These carbon fibers are preferably comprising of carbonized oxidized organic fibers, preferably polyacrylonitrile (PAN)-based carbon fibers. Optionally they may be treated on the surface to further enhance their performance during a runaway event.

Preferably the carbon fibers used for the core inlay of the flame protecting element are recycled carbon fibers, obtained from cut offs of endless filament materials, like unused filament rovings, carbon fibre textile cutoffs or the like. These may come from other industries with similar requirements like airplane or aerospace applications. Preferably the recycled carbon fibers comprise at least 80% of PAN-based carbon recycled fibers.

The length of the carbon fibers is preferably in the range between 30 mm and 80 mm.

The fibrous inlay core layer based on carbon fibers is mechanical bonded, preferably by needling, knitting, weaving, braiding or stitch bonding. The mechanical binding of the carbon fiber inlay layer enhances the abrasive resistance and may enhance the eruption barrier effect, withstanding the power of the gas flow against the surface of the layer. It was found that a mechanically bonded carbon fiber core layer worked better than just a laid fibrous or endless filament nonwoven layer. During an abrading fire event loosely laid fibers or filaments could be pushed away or moved aside by the gas pressure, thereby negating the flame protecting properties of the carbon fibre within the flame protecting element. In case of a mechanically bonded layer this becomes more durable, causing a delay in the time to perforation and preventing the flame pressure from creating an opening in the carbon fiber network.

Preferably, a mechanical bonded mat or felt of carbon fibers may be achieved with a needle felt layer, whereby the needling is enough to obtain an entangled web of fibers, whereby the entangling as well as the increased fiber friction together may increase the exposure time before a perforation occurs.

Surprisingly, not the use of carbon fibers alone, but the use of carbon fibers in a mechanical bonded mat or felt is increasing the resistance of the flame protecting element against a thermal runaway event, hence increasing the exposure time before a perforation.

Furthermore, the use of the mechanical bonded layer of carbon fibers, rather than mixing the carbon fibers into the glass fibers or other fibre type reinforcements, increased the exposure time of the overall trim part.

Preferably, the fibrous inlay core layer, comprising a mechanically bonded nonwoven layer of carbon fibers, has an area weight of at least 100gsm, preferable an area weight between 100 and 600 gsm. Although a carbon fiber layer with an area weight of 600gsm may on its own withstand a thermal runaway event, such a layer will fail any dielectric strength test, in particularly the risk of an electric current or spark jump between the battery and the outer often metal casing is a high risk that needs avoiding. Any sparks will also increase the risk of any thermal runaway event of neighbouring cells.

The fibrous inlay core layer is sandwiched between at least one lower and one upper fibrous inlay made of a second inorganic fibrous material. This will not only increase the exposure time before a perforation during a thermal runaway but also decrease a possible electric short cut. Preferably the two outer fibrous inlay layers comprise inorganic fibers with a melting temperature above 800°C, preferably above 1200°C.

Preferably, the fibrous inlay layers made of a second inorganic fibrous material may comprise any one of glass fibers, aramid fibers, silica fibers, basalt fibers, boron fibers and or ceramic fibers, for instance silicon carbide-based fibers or a mixture of such fibers, more preferably glass fibers.

The fibers may be in any form, but preferably a fiber mat, for instance by a carded cross-lapped needle process or an airlaid process is sufficient to enhance the features of the flame protecting element

The outer fibrous inlay layer of the flame protecting element may comprise a fibrous mat of cut inert fibers. Alternatively, they may comprise continuous filaments for instance they may be formed by any one of unidirectional tapes or fabrics, or other forms or glass filament laid layers. The use of continuous filaments has the advantage of an even stronger plate but may decrease the formability of the flame protecting element.

The upper and lower inlay layers may be laid in a mat or fibrous layer, eventually lightly bonded for ease of handling and transport. Preferably they layers are bonded with a matrix, preferably an emulsion matrix based on polyvinyl alcohol or polyvinyl acetate. This binding is only for transport and or storage of the single layer material and should not interfere with the thermoset matrix material used to form the final flame protecting element.

The at least one lower and one upper fibrous inlay made of the second inorganic fibrous material, preferably comprises fibers with a staple length between 30mm and 70 mm.

Preferably at least one lower and one upper fibrous inlay made of a second inorganic fibrous material, have an area weight per layer of at least 300gsm, preferably at least 450gsm. Preferably glass fiber layers with such a preferred area weight are used. The area weight of the mat is limited towards the high weights by the space available for the full flame shield or plate. This is in most cases less than 5mm for all layers.

Surprisingly, it was found that the total area weight of the lower and upper inlay together is influencing the pyrotest results. Preferably the total amount of fibers in the two fibrous inlay layer is at least 900 gsm, preferably at least 1800 gsm. Preferably, the two fibrous inlay layers are equal in weight and/or material.

The lower fibrous inlay, the core inlay and the upper fibrous inlay are stacked and impregnated with the thermoset matrix before moulding in the final shape, this might be a flat plate or a more shaped form, like curved and or including flanged areas and or follow the shape of the impact protecting element.

The flame protecting element is compression moulded in its final thickness and shape, while impregnated with the matrix to substantially fill all voids in all layers thereby binding the layers together. Preferably the flame protecting element according to the invention is watertight, as well as airtight.

The fibrous inlay core layer sandwiched between at least one lower and one upper fibrous inlay according to the invention are embedded within the same thermoset matrix material, such that the flame protecting element forms a single plate material.

Preferably the full stack of layers are impregnated with a cross-linked matrix, preferably a rigid polyurethane.

The matrix may be applied as a foam to enable penetration and spreading of the matrix throughout the layers. Upon impregnation under pressure the material is densified and most of the cellular structure of the foam is collapsed to form a dense plate.

The thermoset matrix as such may have an effect on the flammability of the flame protecting element but does not have a significant effect on the exposure time before a perforation of the actual thermal runaway. However, the use of the matrix as a binder enables the production and installation in the battery case without losing fibers and makes the flame protecting element water and airtight, enabling a gas guiding within the battery housing under normal working conditions and at the onset of a thermal runaway event.

Preferably a polyurethane is used as the thermoset matrix of the flame protecting element. Polyurethane is typically obtained from the reaction of a polyurethane forming mixture comprising polyol and isocyanate, which may be premixed just before application. The polyurethane forming mixture generally used in the process of the present invention will include: at least one polyol component with an average OH number of 300 to 900, the individual polyols having a functionality of 2 to 6; at least one isocyanate, preferably at least one of an isomer blend of methylene diphenyl diisocyanate (MDI), polymeric MDI, or prepolymers thereof; optionally a blowing agent, preferably water; one or more catalysts including amine-based and metal-based catalysts; surfactants or stabilizers; mould release agent and additives such as fillers, colorants, or rheology modifiers. Suitable polyols can be polyester, or polyether based.

An MDI based polyurethane is preferred as the thermoset matrix material as it provides for a better flame retardancy, than TDI or other based polyurethanes.

Alternatively, a thermoset matrix is used based on polyamide, phenolic, epoxy or silicon.

Preferably a flame retardant is used in the thermoset matrix to reduce the risk of fire traveling via the matrix to neighbouring battery cells thereby enhancing the overall speed of the event. It also reduces the speed of events at the beginning stages where a cell is overheating but not in a full thermal run away yet.

Preferably at least 15%, preferably between 20 and 40% by weight based on the full flame protecting element is the matrix, whereby the matrix can be any of the mentioned above.

The flame protecting element comprising at least 3 inlay layers, with two outer inorganic fibrous inlay layer and a core inlay layer comprising mechanically bonded carbon fibers impregnated with a matrix is moulded in a 3-Dimensional shape to enable a good covering of impact protecting element and or the battery cells. Preferably, the thermoset matrix material is allowed to spread beyond the fibrous inlay materials for both the cover layers as well as the carbon fiber mat to enable a sealing off of at least the carbon fibers also in the peripheral areas.

Preferably the fibrous inlays of the cover layers are extended beyond the carbon layers and may extend into the peripheral areas to further enhance the strength in these areas. Only one cover layer or both cover layer fibrous inlay layers may extend at least partially into the peripheral area. By extending the matrix material and optionally one or both inorganic fiber inlays it is prevented that carbon fibers are exposed at an edge and therefore any direct contact of metal with carbon fibers is prevented.

The extension of the fibrous inlays of the cover layers may be done in predefined areas with a need for enhanced mechanical properties, while other peripheral areas are only sealed by the matrix material.

The flame protecting element is placed on the impact protecting element to form the Protective part for the battery housing of electric vehicles according to the invention such that the flame protecting element would face the battery cells with one surface while covering the impact protecting element from direct exposure to the battery cells, at least to the venting area of the battery cells, in case of a fire.

Preferably both elements are mounted face to face, preferably with an adhesive. Preferably a flame retardant adhesive is used.

The flame protecting element may cover at least part of the surface of the impact protecting element according to the invention, preferably by mounting or bonding to its surface or to surrounding structural structures, for instance by using mechanical means for mounting and or by using an adhesive layer between the flame protecting element and the adjacent surface of the impact protecting element.

The impact protecting element comprises a fiber reinforced thermoplastic core, and a first and a second skin, whereby the first and second skins are continuous filament reinforced thermoplastic composites and cover opposite surfaces of the core thereby forming a sandwich composite.

### The impact protecting element

The protective part for the battery housing of electric vehicles comprises an impact protecting element comprising a reinforced thermoplastic core layer comprising chopped fibers embedded in a first thermoplastic matrix.

Preferably, the chopped fiber content of the reinforced thermoplastic core layer is not more than around 40 % by weight of the core, preferably not more than around 30 % by weight of the core.

The chopped fibers of the reinforced thermoplastic core layer may have a fiber length above 5 mm and below 100 mm, preferably at least 80% of the fibers are between 10-25 mm.

The amount of fiber and fiber length of the reinforced thermoplastic core is chosen to maintain a balance of moldability during processing and strength and stiffness of the final material.

Shorter fibers would allow a thermoplastic material heated beyond its melting point to flow easier within the mould during forming as there would be less resistance to the flow of the thermoplastic. However, the performance of such a core material would be limited compared to one with longer fibers. The longer the core fiber, the more resistant to flow the core becomes and to overcome this would require higher press force to mould. Furthermore, the reduced flowability of the core in this scenario may prevent the core material from filling the cavity completely before hardening. In one preferred embodiment the reinforced thermoplastic core layer is produced using a Long Fiber Thermoplast (LFT) or a direct Long Fiber Thermoplastic (D-LFT or LFT-D) process.

The Long Fiber Thermoplastic (LFT) process may be used to obtain the core layer by reheating a pelletized core material comprising the matrix and chopped fibers. The length of the pelletized core material defines the maximal length of the chopped fibers in the core material. These fiber lengths are typically range from 2 - 25 mm.

In the D-LFT process filament tows are feed into the extruder while heating up the matrix, due to the action of the extruder the tows are chopped into smaller flakes forming the chopped fibers, while maintaining a longer overall average length. The cutting of the filaments within the direct LFT process can enable a wider range of fiber lengths. preferably the targeted average fiber length in the D-LFT process is between 2-50 mm. In certain instances, fibers in the range of 100 mm length may be present due to variations in the in process cutting and the flow of material through the extruder(s). Preferably such longer fibers are kept to a minimum as they increase the force required to shape the material.

The Long Fiber Thermoplast (LFT) process may be used to obtain the core layer by reheating pelletised core material comprising the matrix and staple fibers. The length of the pelletised core material defines the maximal length of the staple fibers in the core material. These fiber lengths are typically range from 2- 25 mm.

The substantial majority of long fibers in the long fiber reinforced thermoplastic core have a fiber length above 5 mm and below 100 mm, preferably at least 80% of the fibers are between 10-25 mm to achieve a good balance between moldability and final part strength and stiffness

The fiber content of the reinforced thermoplastic core layer is preferably below 40 %, preferably between 20 and 30 % by weight. While it is possible to achieve a higher fiber content in the core layer of up to around 50 %, this can adversely affect the flowability of the reinforced thermoplastic core during the forming process as the reinforcement fibers will hinder the flowability of the heated core material. Also, the higher the fiber content in the core material, the higher the press force needed for the forming into the mould cavity of the LFT or D-LFT material. The risk with high core fiber content and limited press force is that part of the edge regions of the part will not fully form. Thus, keeping the fiber volume in the core below 40 % by weight and preferably between 20 and 30 % by weight, will yield a good balance between the flowability of the core during moulding and the final strength and stiffness of the core. Furthermore, as impact absorbance is an important performance criterion for this type of part, a higher fiber volume content in the core may lead to a more brittle part. Therefore, it is preferably to limit the fiber volume of the core to below 40%.

Protrusions, like ribs, can be formed by the core material on its own, either moved through the skins or through dedicated opening in the skin layers.

The protective part for the battery housing of electric vehicles comprises an impact protecting element comprising a first and second skin layer. These skin layers comprise continuous filaments in a second matrix.

The skins contain continuous filaments of reinforcement material embedded in a second thermoplastic matrix and may preferably be in the form of an organosheet, an impregnated non-crimp fabric (NCF) or unidirectional (UD) tape or tapes.

Unidirectional (UD) tapes -as used throughout this document- are endless fiber-reinforced tapes of different widths with unidirectional aligned reinforcing fibers in a thermoplastic matrix. Preferably, endless filaments may be used in UD tapes.

Organosheets - as used throughout this document- are semi-finished materials where endless filament-based reinforcing fabrics are embedded in a thermoplastic polymer matrix. Preferably the fabrics are one of a knit or woven textile structure.

Impregnated non-crimp fabrics (NCF) -as used throughout this document- are made of aligned reinforcing filaments or fibers held together by a stitch yarn embedded in a thermoplastic matrix. NCFs can be very flexible in their fabric layup and can vary from essentially a UD fabric to a fully isotropic fabric. An NCF can also be produced to be a mesh or grid with openings between the reinforcements, should this be desired. The stitching yarn does not interrupt the orientation of the filaments or fibers too much as the stitching yarn makes up only a tiny fraction of the overall fabric but the stitching yarn facilitates enough rigidness of the structure to hold any desirable shape.

Preferably endless filaments may be used in all reinforcing materials used for the skin layers. Typically, reinforcement materials as used in the skins contain several filament-based layers with specific orientation. Examples can be layers with two layers in 0° and 90° orientation, four layers in 0°, 90°/90°/0° or more layers and any angle between 0° and 90° are also possible. Alternating direction of the layering enables an equal stiffness in all directions of the part, however, for manufacturing efficiency 0° and 90° directions are preferred.

The cover layer or layers of the sandwich material forming the impact layer may be formed by either UD tapes, impregnated NCFs or organosheets, either in a single layer or in multiple layers. In the case of multiple layers, they may be in alternating directions.

The benefit in using any type of skin material described is that a high fiber content by weight is possible. Therefore, the fiber content of the skins is preferably above 60%, and preferably above 65% by weight. The high fiber content and the endless filament nature of the skin layers imparts excellent mechanical properties to the composite sandwich construction, whereby the skin layers maximize the strength and stiffness performance achievable with the materials used.

With the typical filament placement of 0° and 90° of the skins, either through the weave, the UD tape or NCF structure, it is intuitive that square or rectangular shapes are the easiest to produce without incurring any waste. While the majority of these protective parts for the battery housing of electric vehicles are generally in a square or rectangular overall shape, the border regions or part edges will typically have more complex geometries like irregular shaped part edges.

Preferably the border region comprises the core material and not the skin layers in the impact protecting element to further optimise the material usage.

Sandwich parts like the ones described for impact protecting elements may be compression moulded into a final shape.

Protrusions in the scope of the invention as claimed may include but are not limited to at least one of a rib, a grid structure, a bead, a stiffening element, a fixation point, an aesthetic element, like a logo, a channelling element, an embossing element, or an air guiding element.

Automotive structural part according to the invention comprises a core layer comprising chopped or chopped fibers embedded in a first thermoplastic matrix, and skin layers comprising continuous filaments embedded in at second thermoplastic matrix, whereby due to the nature of the materials used, the core and skins may all come with their own matrix material.

Preferably the polymers of each matrix within the impact protecting element are at least materially compatible.

Preferably all matrix materials within the impact protecting element are at least based on the same polymer. This ensures strong bonding between the different layers and allows efficient transfer of energy within the composite. However, as they can be chosen independent, they might differ in melt flow index, melting temperature and or the use of additives.

The first and second thermoplastic matrix used in the impact protecting element may comprise at least one or a combination of the following polymers or copolymers: a polyolefin type material for instance a polypropylene PP, a polyamide type material for instance, polyamide-6 PA6, polyamide 66 PA66, a polyester based material, for instance polyethylene terephthalate PET, polybutylene terephthalate PBT, a polycarbonate PC, or a polyether ether ketone PEEK.

The fiber or the continuous filaments reinforcements of the core and skin are preferably inorganic, preferably they may be an inorganic material, preferably one of glass, basalt, aramid, carbon, ceramic or natural fibers, like bast fibers, for instance hemp, kenaf or flax or jute, or a mixture of these fiber materials.

Preferably the bulk of the reinforcement fibers and filaments is glass based. Preferably all are glass based.

The protective part for the battery housing of electric vehicles may include gas guiding elements, either as ribs formed in the surface of the impact protecting element facing the batteries or by adding additional channels for instance metal channels and or guides.

Preferably, additional appliances can be added, for example for further stiffening, additional reinforcement, and/or embedded means for fixation points may be added as requested by the car maker. These additional appliances are preferably, metallic and may include plates, rods and/or inserts. Advantageously, they may be added during the moulding process. Alternatively, they may be added once the completed part is removed from the tool, this is especially common for metallic inserts

The protective part according to the invention can be part of a battery housing for traction batteries for an electric vehicle, either while placed in a vehicle or later in life when used as an electrical storage system. Such a battery storage may comprise at least one battery cell with a battery venting opening.

At least one part of the housing comprises a protective part according to the invention with an impact protecting element and a flame protecting element according to the invention, whereby the flame protecting element is placed adjacent and opposite of a battery cell facing the battery venting opening such that at least a jet blast of a thermal runaway event will hit the flame protecting element.

Battery storage for traction batteries comprising at least one protective part according to the invention, whereby the protective part comprises at least the impact protecting element and or flame protecting element moulded in a 3-dimensional shape such that any gas emission of a battery cell is guided to a vent opening either the protective part and or in the battery storage housing.

### Figures

Figure 1 Schematic figure of an electric driven vehicle on a road with a battery housing comprising a protective part according to the invention
Figure 2 Schematic figure of an impact protecting element according to the invention.
Figure 3 Schematic figure of a flame protecting element according to the invention.
Figure 4 is set up of the pyrotest.

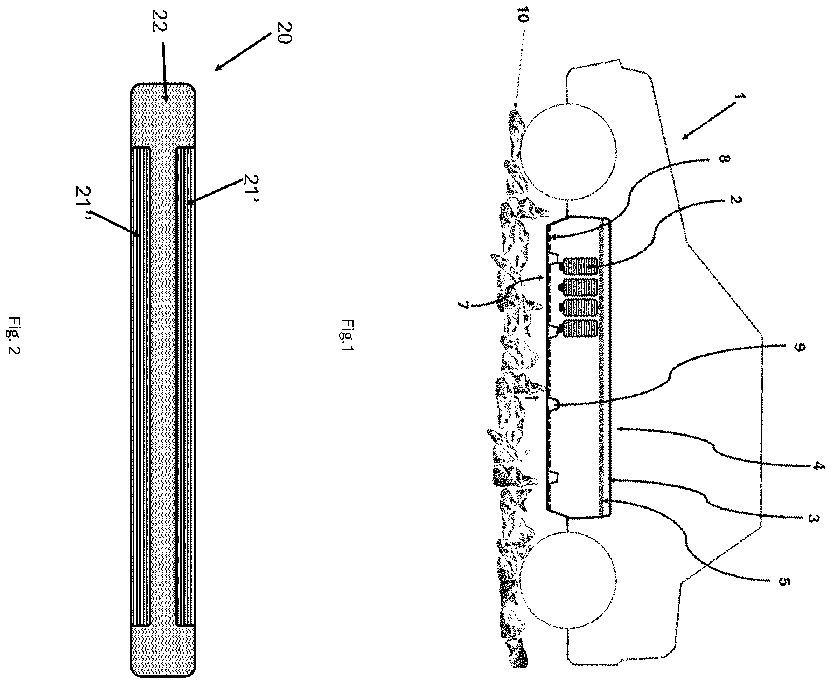

Figure 1 is showing an electric vehicle 1 on a rough road 10 with protruding stones. The vehicle 1 comprises a battery housing 4 placed underneath the passenger compartment between the wheels of the car. The battery housing is not to scale. The battery housing comprises batteries 2 placed in contact with a cooling plate 5. The battery housing further comprises a cover 3 and a tray 7, whereby the tray 7 is facing the road 10.

Stones and or potholes on the road 10, but also any loose parts, may damage the underside of the vehicle while driving on the road 10. As the battery housing is located underneath the car between the wheels, with the lower part of the housing facing the road. The battery housing and possibly the batteries 2 within may be prone to damage. As already disclosed in detail any damage to a battery cell 2 or to battery cells may result in a runaway event, an uncontrolled battery fire driven by the battery chemistry resulting in a fast reaction time, high temperature reaching over 800°C and cumulation in a jet flame and an ejecta of debris and chemicals as well as gas.

Hence there is a need for both an impact protecting element facing towards the roadside and a flame protecting element facing towards the battery cells. Both elements are combined in the protective part according to the invention.

The lower part of the battery housing -the tray 7, may be an example of a protective part according to the invention, with an impact protecting element forming the tray and a flame protecting element 8 adhered to the surface facing the batteries 2. The lower part of the battery housing or the battery the tray 7, may also include venting channels 9.

Alternatively, the batteries 2 may be mounted inversely to what they are shown. In this case, the cooling plate 5 would sit below the batteries 2 and the flame protecting element 8 would be fixed to the battery lid 3, with the tray 7 sitting below the cooling plate 5.

The key is that the flame protecting element 8 directly faces any potential venting or discharge from the batteries 2 in case of a thermal runaway and that the flame protecting element 8 thereby protects the battery housing 4 in case of a thermal runaway event.

The adhesion of the flame protecting element 8 to the impact protecting element combine to improve the mechanical performance of the battery housing 4

Figure 2 is showing a cross section of the impact protecting element 20 according to the invention. The impact protecting element 20 comprising a fiber reinforced thermoplastic core 22 comprising fibers in a first matrix, and a first skin 21' and a second skin 21", whereby the first and second skins comprise continuous filament in second matrix, and whereby the skins cover opposite surfaces of the core thereby forming a sandwich.

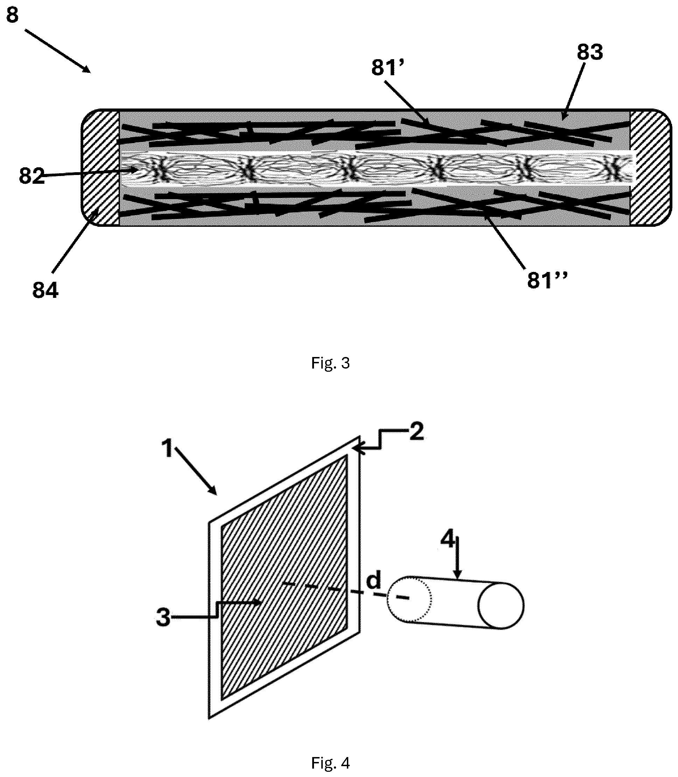

Figure 3 is showing a cross section of a flame protecting element 8 according to the invention. The flame protecting element 8 comprising at least one lower 81" and one upper fibrous inlay 81' comprising inorganic fibrous material and a fibrous inlay core 82 comprising a mechanically bonded nonwoven layer of carbon fibers placed between the upper 81' and lower 81" fibrous inlay, and whereby the core inlay layer and the upper and lower inlay layers are embedded within the same thermoset matrix material 83, such that the flame protecting element forms a single plate material.

Figure 4 is showing the pyro test (1) set up whereby a test plate of the material to be tested (3) is placed in a metal holding frame (2). A pyrotechnical body (4) WECO CE 0589-T1-0025, (stage firework Volcano with Net explosive quantity (NEQ) 245 g, at least 20s burning time and a height when burned without constrains of 7m. The firework specification is of the type >1200°C), was placed with the fire direction towards the test plate, at a distance (d) of 30 mm from the middle of the plate to the tip of the pyrotechnical body (number in brackets see figure 1 of setup,). The pyrotechnical body was ignited with a remote control giving a signal to an electric igniter. The whole process was filmed and the time until perforation was measured based on the filmed document.

This test is accepted by the car manufacturers as a simulation of a thermal runaway event at the extreme case whereby not only high temperatures are achieved, but also the additional effect of propelling gas, particles and debris is measurable.

An example of the jet flame shield according to the invention was measured and compared to reference materials as well as the material layers alone.

## Claims

1. Protective part for the battery housing of electric vehicles comprising an impact protecting element comprising a fiber reinforced thermoplastic core comprising fibers in a first matrix, and a first and a second skin, whereby the first and second skins comprise continuous filaments in second matrix, and whereby the skins cover opposite surfaces of the core thereby forming a sandwich, and further comprising at least one flame protecting element, **characterized in that** the flame protecting element comprises at least one lower and one upper fibrous inlay comprising inorganic fibrous material and a fibrous inlay core comprising a mechanically bonded nonwoven layer of carbon fibers placed between the upper and lower fibrous inlay, and whereby the core inlay layer and the upper and lower inlay layers are embedded within the same thermoset matrix material, such that the flame protecting element forms a single plate material.

2. Protective part for the battery housing of electric vehicles according to one of the preceding claims whereby the impact protecting element is only partially covered by the flame protecting element.

3. Protective part for the battery housing of electric vehicles according to claim 1, whereby the impact protecting element and the flame protecting element are at least partially bonded by an adhesive layer, preferably by an adhesive layer based on polyurethane, preferably a thermoplastic polyurethane, a silicon based adhesive, an acryl based adhesive, an epoxy or phenolic based glue, an adhesive based on silyl modified polymers (SMPs), a polyester based adhesive, preferably a terephthalate based adhesive, a maleic anhydride adhesive, or a thermoplastic hotmelt adhesive.

4. Protective part for battery housing of electric vehicles according to claim 3, whereby the adhesive layer is applied between the impact and the flame protecting elements such that the cut sides of the flame protecting elements are covered by the adhesive to seal the carbon fibers off.

5. Protective part for the battery housing of electric vehicles according to one of the preceding claims, whereby the thermoset matrix material of the flame protecting element comprises a matrix based on polyurethane, polyamide-imides, phenolic, epoxy or silicon.

6. Protective part for the battery housing of electric vehicles according to one of the preceding claims, whereby the carbon fibers used for the core inlay of the flame protecting element are recycled carbon fibers, obtained from cut offs of endless filament materials, like unused filament rovings, carbon fiber textile cutoffs or the like.

7. Protective part for the battery housing of electric vehicles according to one of the preceding claims, preferably the carbon fibers comprise at least 80% of PAN-based carbon fibers, preferably from recycled sources.

8. Protective part for the battery housing of electric vehicles, according to one of the preceding claims whereby the inorganic fibrous material for the upper and lower inlay of the flame protecting element comprises fibers and or filaments.

9. Protective part for the battery housing of electric vehicles according to one of the preceding claims whereby the inorganic fibrous material for the upper and lower inlay of the flame protecting element comprises inorganic material, preferably glass, basalt, aramid, or ceramic or a mixture thereof.

10. Protective part for the battery housing of electric vehicles according to one of the preceding claims, whereby the first and second thermoplastic matrix of the impact protecting element comprises at least one or a combination of the following polymers or copolymers: a polyolefin type material for instance a polypropylene PP, a polyamide type material for instance, polyamide-6 PA6, polyamide 66 PA66, a polyester based material, for instance polyethylene terephthalate PET, polybutylene terephthalate PBT, a polycarbonate PC, or a polyether ether ketone PEEK.

11. Protective part for the battery housing of electric vehicles according to one of the preceding claims whereby the skins of the impact protecting element comprise inorganic filaments, preferably one of glass, basalt, aramid, carbon.

12. Protective part for the battery housing of electric vehicles according to one of the preceding claims whereby the staple fibers of the core of the impact protecting element, comprises inorganic material, preferably glass, basalt, aramid, carbon, ceramic or natural fibers, like bast fibers, for instance hemp, kenaf or flax or jute, or a mixture of these fiber materials.

13. Protective part for the battery housing of electric vehicles according to one of the preceding claims whereby the reinforced thermoplastic core of the impact protecting element can extend beyond the skin layers of the impact protecting element.

14. Protective part for the battery housing of electric vehicles according to one of the preceding claims, further comprising at least one of metal stiffening rods, means for mounting, stiffening plates, gas guiding plates, gaskets, sealings.

15. Use of the protective part according to one of the preceding claims as a part of a battery housing preferably a lid, a tray, side panel, a cover, or as an under battery panel, a battery housing panel, a module cover, battery module cover, floor panel between the passenger compartment and the battery housing, or battery management system cover.
